# EUROPÄISCHE PATENTSCHRIFT

(11) **EP 0 717 069 B1**
(45) Veröffentlichungstag und Bekanntmachung des Hinweises auf die Patenterteilung: **31.03.1999**
(21) Anmeldenummer: 95119264.0
(22) Anmeldetag: 07.12.1995
(51) Int. Cl.: C08K 5/00, C08K 13/00, C08G 18/66

(54) **Stabilisierte, thermoplastische Polyurethane**
Stabilized, thermoplastic polyurethanes
Polyuréthanes thermoplastiques stabilisés

(30) Priorität: 15.12.1994 DE 4444710
(43) Veröffentlichungstag der Anmeldung: 19.06.1996
(73) Patentinhaber: Elastogran GmbH, D-49440 Lemförde (DE)
(72) Erfinder: Prissok, Frank, Dr., D-49448 Lemförde (DE); Lehrich, Friedhelm, Dr., Burning Busch, Michigan 48138 (US); Chang, Patrick, Dr., Fox Chase Lane, Michigan 48134 (US); Glinka, Aleksander, D-49088 Osnabrück (DE)
(74) Vertreter: Karg, Jochen

(56) Entgegenhaltungen:
- EP-A- 0 214 292
- EP-A- 0 334 186
- EP-A- 0 340 040
- DE-A- 3 725 926

## Beschreibung

Die Erfindung betrifft stabilisierte, thermoplastische Polyurethane, die eine spezielle Stabilisatorenkombination enthalten.

Die Herstellung von thermoplastischen Polyurethanen (TPU) ist bekannt und wird in zahlreichen Patent- und Literaturpublikationen beschrieben.

Beispielhaft genannt sei das Kunststoff-Handbuch, Band VII, Polyurethane, Carl-Hanser-Verlag, München, 1. Auflage, 1966, herausgegeben von Dr. R. Vieweg und Dr. A. Höchtlen, sowie 2. Auflage, 1983, und 3. Auflage, 1993, herausgegeben von Dr. G. Oertel.

Die bekannten TPU auf der Basis von Diisocyanaten, höhermolekularen Polyhydroxylverbindungen und niedermolekularen Kettenverlängerungsmitteln sind durch ein ausgewogenes Eigenschaftsbild gekennzeichnet und haben sich deshalb auf einer ganzen Reihe von Einsatzgebieten ausgezeichnet bewährt. Trotz der Vorzüge bezüglich ihrer mechanischen Eigenschaften, wie Festigkeit und Verschleißverhalten, weisen die bekannten TPU jedoch noch verschiedene Mängel auf, insbesondere hinsichtlich ihrer thermischen, hydrolytischen und chemischen Langzeitstabilität unter erhöhten Temperaturen und aggressiven Umwelteinflüssen, was ihre Verwendung im Lebensmittelbereich sowie in der Medizin und Pharmazie wesentlich einschränkt bzw. ganz verhindert.

Produkte, die im Lebensmittelbereich, in Medizin und Pharmazie zur Anwendung kommen, unterliegen strengen Zulassungsauflagen. Jeder Rohstoff, der zu ihrer Herstellung verwendet wird, muß toxikologisch unbedenklich sein und eine Zulassung zur Verwendung mit Lebensmitteln besitzen. Die nationalen Bestimmungen zur Zulassung variieren zum Teil sehr stark. Als führende Institution auf diesem Gebiet wird die US-amerikanische Food and Drugs Administration, FDA, angesehen.

Für Elastomere sind gegenwärtig die FDA Normen
- CFR 21 Part 177.1680 "Polyurethane Resins"
- CFR 21 Part 177.2600 "Rubber Articles Intended for Repeated Use" und
- CFR 21 Part 178.2010 "Antioxidans and/or Stabilizers for Polymers"
sowie die EG-Richtlinie
- EWG-Richtlinie 90/128 "Richtlinie der Kommission über Materialien und Gegenstände aus Kunststoff, die dazu bestimmt sind, mit Lebensmitteln in Berührung zu kommen"
anzuwenden.

Polyurethane, insbesondere TPU auf der Basis von Polyetherdiolen, sind bei der Verarbeitung, bei der Lagerung bei erhöhten Temperaturen und bei Außenbewitterung mit UV-Einstrahlung und Aufheizung einem oxidativen Abbau ausgesetzt, der sich in Form einer Verfärbung des Materials und Verschlechterung der mechanischen Eigenschaften äußert.

Je nach der Art des Polymeren kann es neben der Verfärbung auch zu Kreidung und Oberflächenrissen kommen, die in Verbindung mit dem Verlust an mechanischen Eigenschaften zu einer völligen Unbrauchbarkeit eines Bauteiles führen können.

Um diesen unerwünschten Prozessen zu begegnen, ist unter anderem der Einsatz von Antioxidantien gegen den thermooxidativen Abbau auf der Basis von Phosphiten und Phosphonaten, Thioethern und phenolischen Antioxidantien bekannt. Sterisch gehinderte Amine, Benzophenone, Benztriazole sowie nickelorganische Verbindungen fungieren als UV-Stabilisatoren und Radikalfänger, die ebenfalls, wenn auch in verminderter Form, zur Thermostabilisierung beitragen können.

Grundlegende Ausführungen hierzu sind in dem bereits erwähnten Kunststoff-Handbuch, Band VII, beispielsweise auf den Seiten 120-122 der 3. Auflage, enthalten. Darüber hinaus wurden zu dieser Problematik eine Vielzahl von Patenten bzw. Patentanmeldungen veröffentlicht. Beispielhaft genannt seien US-A-4,408,020, EP-A-125049, EP-A-281905, EP-A-376674, EP-A-399272, JP-A-57 202 320, JP-A-61 126 149, JP-A-63 179 917, JP-A-01 145 110 und JP-A-01 261 456. Es ist auch üblich, die für die Herstellung der TPU eingesetzten Rohstoffe, insbesondere die Diisocyanate, einer Stabilisierung zur Verbesserung ihrer Lagerstabilität zu unterziehen, beschrieben beispielsweise in US-A-2,957,903, US-A-3,585,229 oder DE-A-2 249 375.

Die jeweils eingesetzten Stabilisatoren gehören nicht zu den lebensmittelrechtlich zugelassenen Stoffen bzw. werden in Kombination mit lebensmittelrechtlich nicht zugelassenen Stoffen oder in zu hohen Dosen eingesetzt.

Ohne eine geeignete Stabilisierung werden TPU bei erhöhten Temperaturen in kurzer Zeit zerstört.

Der vorliegenden Erfindung lag daher die Aufgabe zugrunde, ein TPU zu entwickeln, das im Lebensmittelbereich sowie in Medizin und Pharmazie eingesetzt werden kann und das neben guten mechanischen Eigenschaften eine gute Lagerstabilität, insbesondere eine gute Beständigkeit gegen Wärmealterung, Heißwasser, UV- und Röntgenbestrahlung besitzt.

Diese Aufgabe wurde erfindungsgemäß dadurch gelöst, daß man zur Stabilisierung des TPU eine Kombination aus N,N'-Hexamethylen-bis-(3,5-di-tert.-butyl-4-hydroxy-hydrozimtsäureamid) und Pentaerythrityl-tetrakis-[3-(3,5-di-tert.-butyl-4-hydroxyphenyl)-propionat] verwendet.

Gegenstand der Erfindung ist demzufolge ein stabilisiertes TPU, das als Stabilisator eine Kombination aus N,N'-Hexamethylen-bis-(3,5-di-tert.-butyl-4-hydroxy-hydrozimtsäureamid) und Pentaerythrityl-tetrakis-[3-(3,5-di-tert.-butyl-4-hydroxyphenyl)-propionat] enthält.

Bei den TPU handelt es sich um die an sich bekannten, im wesentlichen linearen, thermoplastisch verarbeitbaren Polyurethane. Erfindungsgemäß eignen sich prinzipiell alle TPU, die nach den an sich üblichen Verfahren hergestellt werden können. Besonders vorteilhafte Ergebnisse haben sich bei den TPU auf Basis von Polyetherpolyolen ergeben. Für den Einsatz der TPU in Produkten, die im Lebensmittelbereich, in Medizin und Pharmazie zur Anwendung kommen, müssen alle für die Herstellung der TPU verwendeten Rohstoffe den entsprechenden Normen genügen.

Die erfindungsgemäßen TPU können in an sich bekannter Weise durch Polyaddition aus einem oder mehreren Diisocyanaten, einer oder mehreren höhermolekularen Polyhydroxylverbindungen sowie gegebenenfalls einem oder mehreren niedermolekularen Diolen als Kettenverlängerer hergestellt werden. Dabei ist die Verwendung weiterer Zusatzstoffe und/oder Hilfsmittel möglich. Zu den Aufbaukomponenten der TPU ist im einzelnen folgendes auszuführen:

Als Diisocyanate kommen grundsätzlich alle organischen und/oder modifizierten organischen Diisocyanate, insbesondere aliphatische, cycloaliphatische oder vorzugsweise aromatische Diisocyanate, in Betracht. Für Anwendungen im Lebensmittelbereich, in Medizin und Pharmazie sind nach dem heutigen Stand der Normen insbesondere folgende geeignet:
aliphatische Diisocyanate, wie Hexamethylen-diisocyanat-1,6, cycloaliphatische Diisocyanate, wie Bis(isocyanatomethyl)cyclohexan, 4,4-Methylenbis-cyclohexyl-isocyanat, 4,4'-, 2,4'- und 2,2'-Dicyclohexylmethan-diisocyanat sowie die entsprechenden Isomerengemische, und aromatische Diisocyanate, wie 2,4-Toluylendiisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, Diphenylether-4,4'-diisocyanat und 1,5-Naphthylen-diisocyanat.

Besonders bevorzugt werden 4,4'-, 2,4'- und 2,2'-Diphenylmethandiisocyanat (MDI) sowie deren Gemische.

Die organischen Diisocyanate können gegebenenfalls in untergeordneten Mengen, z.B. in Mengen bis zu 3 Mol-%, vorzugsweise bis zu 1 Mol-%, bezogen auf das organische Diisocyanat, durch ein tri- oder höherfunktionelles Polyisocyanat ersetzt werden, wobei dessen Menge jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so daß eine zu weit gehende chemische Vernetzung des Polyurethans vermieden wird.

Als höhermolekulare Polyhydroxylverbindungen mit Molekulargewichten von 500 bis 8000 eignen sich Polyesterdiole und insbesondere Polyetherdiole. In Betracht kommen daneben auch andere hydroxylgruppenhaltige Polymere mit Ether- oder Estergruppen in der Polymerkette, beispielsweise Polyacetale, wie Polyoxymethylene, und wasserunlösliche Formale, z.B. Polybutandiolformal. Die Polyhydroxylverbindungen sollten zumindest überwiegend linear sein und müssen im Sinne der Isocyanatreaktion im wesentlichen difunktionell aufgebaut sein. Die genannten Polyhydroxylverbindungen können als Einzelkomponenten oder in Form von Mischungen zur Anwendung kommen.

Geeignete Polyetherdiole können nach bekannten Verfahren, beispielsweise durch anionische Polymerisation von Alkylenoxiden mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 3, vorzugsweise 2, reaktive Wasserstoffatome gebunden enthält, oder durch kationische Polymerisation mit Lewis-Säuren als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und vorzugsweise zweiwertige, gegebenenfalls Etherbrücken gebunden enthaltende Alkohole, wie z.B. Ethandiol, Propandiol-1,2, Butandiol-1,4, Diethylenglykol, Hexandiol-1,6 und 2-Methylpentandiol-1,5. Die Startermoleküle können einzeln oder als Gemische eingesetzt werden.

Insbesondere geeignet und bevorzugt sind die hydroxylgruppenhaltigen Polytetrahydrofurane (PTHF).

Die im wesentlichen linearen Polyetherole besitzen üblicherweisemittlere Molekulargewichte von 500 bis 8000, vorzugsweise 600 bis 6000, wobei das PTHF ein bevorzugtes mittleres Molekulargewicht von 500 bis 2500, insbesondere von 800 bis 1200, aufweist. Sie können sowohl einzeln als auch in Form von Mischungen untereinander zur Anwendung kommen.

Geeignete Polyesterdiole können beispielsweise aus Dicarbonsäuren mit 2 bis 12, vorzugsweise 4 bis 6, Kohlenstoffatomen und Diolen hergestellt werden. Als Dicarbonsäuren kommen beispielsweise in Betracht: aliphatische Dicarbonsäuren, wie Bernsteinsäure, Adipinsäure, Korksäure, Azelainsäure und Sebacinsäure, und aromatische Dicarbonsäuren, wie Phthalsäure, Isophthalsäure und Terephthalsäure. Die Dicarbonsäuren können einzeln oder als Gemische, z.B. in Form einer Bernstein- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- oder -diester mit 1 bis 4 Kohlenstoffatomen im Alkoholrest, Dicarbonsäureanhydride oder Dicarbonsäuredichloride zu verwenden. Beispiele für die Diole sind Glykole mit 2 bis 10, vorzugsweise 2 bis 6 Kohlenstoffatomen, wie Ethylenglykol, Butandiol-1,4, Hexandiol-1,6, Propandiol-1,3 und Dipropylenglykol. Je nach den gewünschten Eigenschaften können die Diole allein oder gegebenenfalls in Mischungen untereinander verwendet werden.

Als Polyesterdiole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterdiole besitzen in der Regel mittlere Molekulargewichte von 500 bis 6000, vorzugsweise von 800 bis 3500.

Als Kettenverlängerungsmittel mit mittleren Molekulargewichten im allgemeinen von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol und Hexandiol-1,6 und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Polytetramethylenglykole mit mittleren Molekulargewichten von 162 bis 378.

Zur Einstellung von Härte und Schmelzindex der TPU können die eingesetzten Mengen der höhermolekularen Polyhydroxylverbindungen und Kettenverlängerungsmittel in relativ breiten molaren Verhältnissen variiert werden, wobei die Härte und die Schmelzviskosität mit zunehmendem Gehalt an Kettenverlängerungsmittel ansteigt, während der Schmelzindex abnimmt.

Zur Herstellung von weicheren TPU, z.B. solchen mit einer Härte Shore A von kleiner als 95, vorzugsweise von 95 bis 75 Shore A, können beispielsweise die im wesentlichen difunktionellen Polyhydroxylverbindungen und Kettenverlängerer vorteilhafterweise in Molverhältnissen von 1:1 bis 1:5, vorzugsweise 1:1,5 bis 1:4,5 verwendet werden, so daß die resultierenden Mischungen aus höhermolekularen Polyhydroxylverbindungen und Kettenverlängerungsmitteln ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von höhermolekularen Polyhydroxylverbindungen zu Kettenverlängerungsmitteln im Bereich von 1:5,5 bis 1:15, vorzugsweise von 1:6 bis 1:12, liegen, so daß die erhaltenen Mischungen aus höhermolekularen Polyhydroxylverbindungen und Kettenverlängerungsmitteln ein Hydroxyläquivalentgewicht von 110 bis 200, vorzugsweise von 120 bis 180, aufweisen.

Zur Stabilisierung der TPU, insbesondere zur Vermeidung bzw. Verringerung des thermischen und oxidativen Abbaus der TPU wird erfindungsgemäß eine Stabilisatorkombination aus N,N'-Hexamethylen-bis-(3,5-di-tert.-butyl-4-hydroxy-hydrozimtsäureamid) und Pentaerythrityl-tetrakis-[3-(3,5-di-tert.-butyl-4-hydroxyphenyl)-propionat] eingesetzt.

Die Stabilisatorkombination enthält, bezogen auf das eingesetzte TPU, 0,05 bis 1,0 Gew.-%, vorzugsweise 0,1 bis 0,5 Gew.-%, N,N'-Hexamethylen-bis-(3,5-di-tert.-butyl--4-hydroxy-hydrozimtsäureamid) und 0,05 bis 1,0 Gew.-%, vorzugsweise 0,1 bis 0,5 Gew.-%, Pentaerythrityl-tetrakis-[3-(3,5-di-tert.-butyl-4-hydroxyphenyl)-propionat]. Die Stabilisatorkombination wird, bezogen auf das eingesetzte TPU, in einer Menge von insgesamt 0,1 bis 2 Gew.-% verwendet.

Um eine Verfärbung der eingesetzten Diisocyanate und höhermolekularen Polyhydroxylverbindungen bei der Lagerung zu vermeiden, hat es sich bewährt, diese Produkte vorzustabilisieren. Erfindungsgemäß werden hierfür als Stabilisatoren vorzugsweise, insbesondere bei Verwendung von MDI als Diisocyanat und PTHF als Polyhydroxylverbindung, Tri(mixed mono-dinonylphenyl)phosphit und/oder 2,6-Di-tert.-butyl-p-cresol eingesetzt. Die genannten Stabilisatoren werden in einer Menge von jeweils insgesamt 0 bis 0,25 Gew.-%, vorzugsweise von 0,1 bis 0,2 Gew.-% im Falle der Verwendung von Tri(mixed mono-dinonylphenyl)phosphit bzw. 0,05 bis 0,2 Gew.-% im Falle der Verwendung von 2,6-Di-tert.-butyl-p-cresol, angewandt. Diese Vorstabilisierung der Ausgangskomponenten ermöglicht die Herstellung eines im Endprodukt wesentlich helleres TPU.

Alle eingesetzten Stabilisatoren entsprechen in Menge und Zusammensetzung den FDA Normen CFR 21 Part 177.2600 und CFR 21 Part 178.2010 und dem Synoptic Document Nr. 6 der EG (EWG-Richtlinie 90/128).

Es hat sich überraschenderweise gezeigt, daß ein TPU, hergestellt aus lebensmittelrechtlich zugelassenen Rohstoffen, wie insbesondere mit Tri(mixed mono-dinonylphenyl)phosphit und/oder 2,6-Di-tert.-butyl-p-cresol vorstabilisierten MDI und PTHF, Butandiol-1,4 sowie den Stabilisatoren N,N'-Hexamethylen-bis-(3,5-di-tert.-butyl-4-hydroxy-hydrozimtsäureamid) und Pentaerythrityl-tetrakis-[3-(3,5-di-tert.-butyl-4-hydroxyphenyl)-propionat] neben guten mechanischen Eigenschaften eine sehr gute Beständigkeit gegen Wärmealterung, Heißwasser, UV- und Röntgenbestrahlung besitzt.

Es war daher auch in keiner Weise vorhersehbar, daß bei Einsatz der erfindungsgemäßen Stabilisatorkombination der stabilisierende Effekt deutlich höher liegt als bei Verwendung eines einzelnen Stabilisators in der gleichen Menge. Die erfindungsgemäß einzusetzenden Stabilisatorkomponenten weisen in ihrem Zusammenwirken einen synergistischen Effekt auf.

Neben den genannten Aufbaukomponenten können bei der Herstellung der TPU noch weitere Hilfsmittel und/oder Zusatzstoffe zugegeben werden. Genannt seien beispielsweise Katalysatoren, Flammschutzmittel, Gleitmittel, Inhibitoren, Farbstoffe, Pigmente, Füllstoffe und Verstärkungsmittel. Auch diese Hilfsmittel und Zusatzstoffe müssen, wenn die entsprechenden TPU gemäß der Zielstellung dieser Erfindung in Produkten, die im Lebensmittelbereich, in Medizin und Pharmazie zur Anwendung kommen, eingesetzt werden sollen, den entsprechenden Normen genügen. Bewährt hat es sich beispielsweise, die Produkte mit lebensmittelrechtlich zugelassenen Verarbeitungshilfsmitteln, wie Calciumstearat oder N,N'-Ethylen-bis-stearylamid zu versetzen.

Diese Hilfsmittel und/oder Zusatzstoffe können in die Aufbaukomponenten oder in die Reaktionsmischung zur Herstellung der TPU eingebracht werden. Nach einer anderen Verfahrensvariante können diese Hilfsmittel und/oder Zusatzstoffe mit dem TPU gemischt und anschließend verschmolzen werden oder sie werden direkt der Schmelze einverleibt.

Verwendbare Hilfsmittel oder Zusatzstoffe können der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-A 29 01 774 entnommen werden.

Das erfindungsgemäße TPU entspricht bei Auswahl geeigneter Ausgangsprodukte, die neben den erfindungswesentlichen Stabilisatoren eingesetzt werden, den Anforderungen der FDA und dem bisherigen Stand der lebensmittelrechtlichen EG Normen.

Ein in den Eigenschaften vergleichbares, lebensmittelrechtlich zugelassenes, stabilisiertes TPU ist bis jetzt nicht bekannt.

Die Besonderheit des erfindungsgemäß stabilisierten TPU liegt in der sehr guten thermischen, hydrolytischen und chemischen Langzeitstabilität des Produktes, das erstmals einen längerfristigen Einsatz eines lebensmittelechten TPU unter erhöhten Temperaturen, auch in Heißwasser, und unter aggressiven Umwelteinflüssen ermöglicht.

Die Produkte besitzen gute mechanische Eigenschaften, auch nach einer längeren Lagerung bei 130°C. Nach einer Röntgen- oder γ-Bestrahlung tritt im Gegensatz zu unstabilisierten Produkten nur eine sehr geringe Verfärbung und Beeinträchtigung des Materials auf. Die Produkte sind somit für alle üblichen Sterilisationsverfahren geeignet, was für Anwendungen im medizinischen und pharmazeutischen Bereich sehr wichtig ist.

Die Erfindung wird an nachstehenden Beispielen näher erläutert. Bei in den Beispielen angegebenen Teilen handelt es sich um Gewichtsteile.

Es wurden TPU nach folgender Grundrezeptur hergestellt:
1000 Teile Polytetrahydrofuran mit einem mittleren Molekulargewicht von 1000
600 Teile 4,4'-MDI
121 Teile Butandiol-1,4

Dazu wurden die in Tabelle 1 angegebenen Stabilisatoren in den angegebenen Einsatzmengen gegeben, wobei bedeuten:
Stab 1 = N,N'-Hexamethylen-bis(3,5-di-tert.butyl-4-hydroxy-hydrozimtsäureamid)
Stab 2 = Pentaerythrityl-tetrakis-[3-(3,5-di-tert.butyl--4-hydroxyphenyl)-propionat]
Stab 3 = Tri(mixed mono-dinonylphenyl)phosphit
Stab 4 = 2,6-Di-tert-butyl-p-cresol.

Die jeweils verwendeten Stabilisatoren sowie deren Einsatzmengen sind aus Tabelle 1 ersichtlich.

**Tabelle 1**

| Beispiel Nr. | Stab1 | Stab2 | Stab3 in MDI | Stab4 in MDI | FDA Zulassung |
|---|---|---|---|---|---|
| Vergleich 1 | - | - | - | - | ja |
| Vergleich 2 | 1 % | - | - | 0,065 % | nein |
| Vergleich 3 | 0,5 % | - | 0,5 % | - | ja |
| Beispiel 1 | 0,5 % | 0,5 % | 0,2 % | 0,065 % | ja |
| Beispiel 2 | 0,2 % | 0,2 % | 0,2 % | 0,065 % | ja |
| Beispiel 3 | 0,3 % | 0,3 % | 0,1 % | 0,030 % | ja |

Die gemessenen mechanischen Eigenschaften der TPU sind aus Tabelle 2 ersichtlich.

**Tabelle 2**

| Mechanische Eigenschaften an Spritzgußplatten | | | | |
|---|---|---|---|---|
| Beispiel Nr. | ZF/MPa | BD/% | WF/N/mm | Abr./mm³ |
| Vergleich 1 | 56 | 520 | 72 | 30 |
| Vergleich 2 | 55 | 650 | 71 | 32 |
| Vergleich 3 | 44 | 480 | 75 | 26 |
| Beispiel 1 | 51 | 580 | 73 | 22 |
| Beispiel 2 | 53 | 590 | 73 | 24 |
| Beispiel 3 | 52 | 580 | 74 | 24 |
| ZF Zugefestigkeit DIN 53 504 BD Bruchdehnung DIN 53 504 WF Weiterreißfestigkeit DIN 53 515 Abr Abrieb DIN 53 516 | | | | |

An den TPU wurden die in Tabelle 3 ausgewiesenen Farbmessungen vorgenommen.

**Tabelle 3**

| Eigenfarbe der Produkte | | | | |
|---|---|---|---|---|
| Beispiel Nr. | YI | L* | A* | B* |
| Vergleich 1 | 15,1 | 89,5 | 0,4 | 7,7 |
| Vergleich 2 | 3,0 | 99,5 | -0,9 | 3,5 |
| Vergleich 3 | 6,9 | 96,4 | -0,8 | 4,2 |
| Beispiel 1 | 2,8 | 95,5 | -0,2 | 1,6 |
| Beispiel 2 | 4,3 | 95,9 | -0,5 | 2,6 |
| Beispiel 3 | 3,6 | 96,0 | -0,4 | 2,2 |
| YI Yellowness Index L*A*B* Farbwerte des CIELAB Systems | | | | |

Die Prüfkörper wurden 500 Stunden bei 130°C im Umluftofen gelagert. Anschließend wurden erneut die mechanischen Eigenschaften und Farbwerte bestimmt (Tabelle 4).

**Tabelle 4**

| Eigenschaften nach 500 Std. Lagerung bei 130°C im Umluftofen | | | | |
|---|---|---|---|---|
| Beispiel Nr. | ZF/MPa | BD/% | DE* | YI |
| Vergleich 1 | 9 | 370 | 90,9 | 196,0 |
| Vergleich 2 | 14 | 720 | 101,0 | 128,0 |
| Vergleich 3 | 9 | 540 | 105,1 | 176,8 |
| Beispiel 1 | 23 | 830 | 68,8 | 96,0 |
| Beispiel 2 | 17 | 590 | 104,1 | 147,3 |
| Beispiel 3 | 18 | 730 | 100,0 | 137,8 |
| ZF Zugefestigkeit DIN 53 504 BD Bruchdehnung DIN 53 504 DE* Delta E* des LAB* Farbsystems (Farbänderung gegenüber unbelichteter Probe) YI Yellowness Index (kleine DE* und YI Werte zeigen eine geringe Verfärbung bzw. Vergilbung an) | | | | |

In Tabelle 5 sind die Farbwerte nach Bestrahlung der TPU-Prüfkörper angegeben.

**Tabelle 5**

| Verfärbung nach γ-Bestrahlung mit einer Dosis von 25,8 kGy | | |
|---|---|---|
| Beispiel Nr. | DE* | YI |
| Vergleich 1 | 21,4 | 47,8 |
| Vergleich 2 | * | * |
| Vergleich 3 | 12,9 | 22,4 |
| Beispiel 1 | 2,8 | 7,3 |
| Beispiel 2 | 3,2 | 8,8 |
| Beispiel 3 | 3,2 | 8,4 |
| * nicht gemessen DE* Delta E* des LAB* Farbsystems YI Yellowness Index (kleine DE* und YI-Werte zeigen eine geringe Verfärbung bzw. Vergilbung an.) | | |

## Patentansprüche

1. Stabilisierte, thermoplastische Polyurethane, dadurch gekennzeichnet, daß sie als Stabilisator eine Kombination aus N,N'-Hexamethylen-bis-(3,5-di-tert.-butyl-4-hydroxy-hydrozimtsäureamid) und Pentaerythrityl-tetrakis-[3-(3,5-di-tert.-butyl-4-hydroxyphenyl)-propionat] enthalten.

2. Stabilisierte, thermoplastische Polyurethane nach Anspruch 1, dadurch gekennzeichnet, daß die Stabilisatorenkombination, bezogen auf das thermoplastische Polyurethan, 0,05 bis 1,0 Gew.-% N,N'-Hexamethylen-bis-(3,5-di-tert.-butyl-4-hydroxyhydrozimtsäureamid) und 0,05 bis 1,0 Gew.-% Pentaerythrityltetrakis-[3-(3,5-di-tert.-butyl-4-hydroxyphenyl)-propionat] enthält.

3. Stabilisierte, thermoplastische Polyurethane nach Anspruch 1 oder 2, dadurch gekennzeichnet, daß es sich bei dem thermoplastischen Polyurethan um ein Polyadditionsprodukt aus einem oder mehreren Diisocyanaten, einer oder mehreren höhermolekularen Polyhydroxylverbindungen sowie gegebenenfalls einem oder mehreren niedermolekularen Diolen als Kettenverlängerer handelt.

4. Stabilisierte, thermoplastische Polyurethane nach Anspruch 3, dadurch gekennzeichnet, daß bei ihrer Herstellung als Diisocyanat Diphenylmethandiisocyanat eingesetzt wird.

5. Stabilisierte, thermoplastische Polyurethane nach Anspruch 3, dadurch gekennzeichnet, daß bei ihrer Herstellung als Diisocyanat ein mit Tri(mixed mono-dinonylphenyl)phosphit und/oder 2,6-Di-tert.-butyl-p-cresol stabilisiertes Diphenylmethandiisocyanat eingesetzt wird.

6. Stabilisierte, thermoplastische Polyurethane nach Anspruch 3, dadurch gekennzeichnet, daß bei ihrer Herstellung als höhermolekulare Polyhydroxylverbindung Polytetrahydrofuran eingesetzt wird.

7. Stabilisierte, thermoplastische Polyurethane nach Anspruch 3, dadurch gekennzeichnet, daß bei ihrer Herstellung als höhermolekulare Polyhydroxylverbindung Polybutylenadipat eingesetzt wird.

8. Stabilisierte, thermoplastische Polyurethane nach Anspruch 3, dadurch gekennzeichnet, daß bei ihrer Herstellung als höhermolekulare Polyhydroxylverbindung ein mit Tri(mixed mono-dinonylphenyl)phosphit und/oder 2,6-Di-tert.-butyl-p-cresol stabilisiertes Polytetrahydrofuran eingesetzt wird.

## Claims

1. A stabilized thermoplastic polyurethane containing, as stabilizer, a combination of N,N'-hexamethylenebis(3,5-di-tert-butyl-4-hydroxyhydrocinnamide) and pentaerythrityl tetrakis[3-(3,5-di-tert-butyl-4-hydroxyphenyl)propionate].

2. A stabilized thermoplastic polyurethane as claimed in claim 1, wherein the stabilizer combination contains, based on the thermoplastic polyurethane, from 0.05 to 1.0% by weight of N,N'-hexamethylenebis(3,5-di-tert-butyl-4-hydroxyhydrocinnamide) and from 0.05 to 1.0% by weight of pentaerythrityl tetrakis[3-(3,5-di-tert-butyl-4-hydroxyphenyl)propionate].

3. A stabilized thermoplastic polyurethane as claimed in claim 1 or 2 which is the product of the polyaddition of one or more diisocyanates, one or more relatively high-molecular-weight polyhydroxyl compounds and, if desired, one or more low-molecular-weight diols as chain extender.

4. A stabilized thermoplastic polyurethane as claimed in claim 3, wherein the diisocyanate employed in its preparation is diphenylmethane diisocyanate.

5. A stabilized thermoplastic polyurethane as claimed in claim 3, wherein the diisocyanate employed in its preparation is a diphenylmethane diisocyanate stabilized by means of tri(mixed mono/dinonylphenyl) phosphite and/or 2,6-di-tert-butyl-p-cresol.

6. A stabilized thermoplastic polyurethane as claimed in claim 3, wherein the relatively high-molecular-weight polyhydroxyl compound employed in its preparation is polytetrahydrofuran.

7. A stabilized thermoplastic polyurethane as claimed in claim 3, wherein the relatively high-molecular-weight polyhydroxyl compound employed in its preparation is polybutylene adipate.

8. A stabilized thermoplastic polyurethane as claimed in claim 3, wherein the relatively high-molecular-weight polyhydroxyl compound employed in its preparation is a polytetrahydrofuran stabilized by means of tri(mixed mono/dinonylphenyl) phosphite and/or 2,6-di-tert-butyl-p-cresol.

## Revendications

1. Polyuréthannes thermoplastiques stabilisés, caractérisés en ce qu'ils contiennent, à titre de stabilisateurs, une combinaison de N,N'-hexaméthylène-bis-(amide de l'acide 3,5-di-tert.-butyl-4-hydroxy-hydrocinnamique) et de tétrakis-[3-(3,5-di-tert.-butyl-4-hydroxyphényl)-propionate] de pentaérythrityle.

2. Polyuréthannes thermoplastiques stabilisés selon la revendication 1, caractérisés en ce que la combinaison de stabilisateurs contient du N,N'-hexaméthyléne-bis-(amide de l'acide 3,5-di-tert.-butyl-4-hydroxy-hydrocinnamique) à concurrence de 0,05 à 1,0% en poids et du tétrakis-[3-(3,5-di-tert.-butyl-4-hydroxyphényl)-propionate] de pentaérythrityle à concurrence de 0,05 à 1,0% en poids rapporté au polyuréthanne thermoplastique.

3. Polyuréthannes thermoplastiques stabilisés selon la revendication 1 ou 2, caractérisés en ce que, quant au polyuréthanne thermoplastique, il s'agit d'un produit de polyaddition d'un ou de plusieurs diisocyanates, d'un ou de plusieurs composés polyhydroxylés à poids moléculaires élevés, ainsi que, le cas échéant, d'un ou de plusieurs diols à bas poids moléculaires à titre d'agents d'allongement de chaînes.

4. Polyuréthannes thermoplastiques stabilisés selon la revendication 3, caractérisés en ce qu'on met en oeuvre, lors de leur préparation, à titre de diisocyanate, le diphénylméthanediisocyanate.

5. Polyuréthannes thermoplastiques stabilisés selon la revendication 3, caractérisés en ce que, lors de leur préparation, on met en oeuvre, à titre de diisocyanate, un diphénylméthanediisocyanate stabilisé avec du tri(mono-dinonylphényle mixte)phosphite et/ou avec du 2,6-di-tert.-butyl-p-crésol.

6. Polyuréthannes thermoplastiques stabilisés selon la revendication 3, caractérisés en ce que, lors de leur préparation, on met en oeuvre, à titre de composé polyhydroxylé à poids moléculaire élevé, du polytétrahydrofuranne.

7. Polyuréthannes thermoplastiques stabilisés selon la revendication 3, caractérisés en ce que, lors de leur préparation, on met en oeuvre, à titre de composé polyhydroxylé à poids moléculaire élevé, de l'adipate de polybutylène.

8. Polyuréthannes thermoplastiques stabilisés selon la revendication 3, caractérisés en ce que, lors de leur préparation, on met en oeuvre, à titre de composé polyhydroxylé à poids moléculaire élevé, un polytétrahydrofuranne stabilisé avec du tri(mono-dinonylphényle mixte)phosphite et/ou avec du 2,6-di-tert.-butyl-p-crésol.
